Europäisches Patentamt

European Patent Office

Office européen des brevets

(19)

(11) Veröffentlichungsnummer: **0 489 183 A1**

## (12) EUROPÄISCHE PATENTANMELDUNG

(21) Anmeldenummer: **90123086.2**

(22) Anmeldetag: **03.12.90**

(51) Int. Cl.5: **A62B 13/00**

(43) Veröffentlichungstag der Anmeldung:
**10.06.92 Patentblatt 92/24**

(84) Benannte Vertragsstaaten:
**AT BE CH DE DK ES FR GB GR IT LI LU NL SE**

(71) Anmelder: **LUWA LTD.**
**Anemonenstrasse 40**
**CH-8047 Zürich(CH)**

(72) Erfinder: **Hasler, Jürg**
**Im Langacher 28**
**CH-8805 Richterswil(CH)**
Erfinder: **Stolz, Kurt**
**Pfannenstielstrasse 6**
**CH-8820 Wädenswil(CH)**

(74) Vertreter: **Patentanwälte Schaad, Balass &**
**Partner**
**Dufourstrasse 101 Postfach**
**CH-8034 Zürich(CH)**

(54) **Passives Explosionsschutzorgan.**

(57) Das Explosionsschutzorgan weist im einem Rahmen (2) zwischen zwei einander gegenüberliegenden Rahmenseitenwänden (4) parallel zueinander sich erstreckende Winkelprofile (6) im Abstand voneinander auf, deren Schenkel (12) mit der Rahmen-Eintrittsseite (10) einen bei allen Winkelprofilen gleich grossen Winkel (α) einschliessen. Zwischen den gleichen Rahmenseitenwänden (4) erstrecken sich ferner im Querschnitt U-förmige Profile (8), mit dem U-Profil-Steg (16) mit der gegenüberliegenden Rahmen-Austrittsseite (20) fluchtend und zu den Winkelprofilen (6) derart versetzt angeordnet, dass die offene Profilseite der Lücke zwischen zwei Winkelprofilen (6) zugekehrt ist. Aufgrund dieser Anordnung ist für den Explosionsdruck zwischen den Schenkeln (12) benachbarter Winkelprofile (6) eine Eintrittszone (24) mit einer anschliessenden schlitzförmigen Eintrittsöffnung (26) vorhanden, die in eine anschliessende Verbindungskammer (28) mündet, an welche sich eine in Richtung der Eintrittsöffnung (26) offene Reflektionskammer (30) anschliesst. Die Verbindungskammer (28) steht ausserdem über eine Oeffnung (32) mit einem Expansionsraum (34) in Verbindung, welcher über eine Austrittsöffnung (40) zum Schutzraum hin offen ist.

Fig.3

Die Erfindung betrifft ein passives Explosionsschutzorgan für die Luftdurchlassöffnung eines Schutzraumes.

Explosionsschutzorgane in der Form von SchnellschlussVentilen sind für diesen Verwendungszweck schon seit langem bekannt. Die Schliesszeiten solcher Schnellschlussventile können unter 5/1000 sec liegen, und weisen überdies einige Ausbildungen auf, die auf einen Abbau des vor dem Schliessen durchtretenden Druckstosses abzielen. Jedoch wird heute die Auffassung vertreten, dass bei von konventionellen Waffen erzeugten Explosionen bis zum Schliessen mit Verläufen des Druckanstieges zu rechnen ist, bei welchen kritische Drücke innerhalb solcher Schliesszeiten auftreten können und bei welchen der Abbau der durchtretenden Anteile des Druckstosses und damit des entsprechenden Impulses ungenügend ist. Aus der Theorie und Versuchen ist die Idee bekannt, den Abbau bzw. die Abbremsung des Druckes/Impulses ohne Verwendung von Ventilen weiterzutreiben. Für solche Organe ist der Begriff "passive airblast attenuation device" (passiver LuftDruckstoss-Attenuator) geprägt worden.

Aufgabe der Erfindung ist die Schaffung eines gegen kurzzeitige Druckstösse wirksamen, passiven Attenuators bzw. Explosionsschutzorganes, das bei einem Druckstoss eine mit dem Anstieg des Druckes zunehmende Wirkung hat und bei normalem Lüftungsbetrieb einen kleinen Druckabfall verursacht.

Die Lösung dieser Aufgabe gelingt mit den Merkmalen des Kennzeichens von Anspruch 1.

Die auf die Eintrittsöffnung ausgerichtete Reflektionskammer nimmt den Hauptteil eines schon teilexpandierten Druckstosses auf und bewirkt dessen Reflektion. Der zurückgeworfene höhere Druck wirkt dem nachkommenden Druckstoss abbremsend entgegen. Die Wirkung der Reflektionskammer wird durch den kanalisierenden Einfluss der Leitelemente unterstützt, die zur Erzeugung des Reflektionsdruckes ebenfalls herangezogen werden. Ein weiterer Abbau findet im Expansionsraum statt, der die Verbindungskammer mit der Austrittsöffnung und damit dem Schutzraum verbindet. Von Bedeutung ist auch, dass im Bereich der Eintrittszone durch die Anstellung der Leitelemente der Aufbau eines Reflektionsdruckes weitgehend verhindert wird.

Im normalen Lüftungsbetrieb erfährt die Luft in der Eintrittszone durch die strömungsgünstige Ausgestaltung eine kleine Beschleunigung und dementsprechend einen geringen Druckverlust. Aus der Verbindungskammer gelangt die Luft ohne wesentliche Umlenkung in die Expansionskammer, so dass auch hier entstehende Druckverluste vergleichsweise klein sind.

Weitere Einzelheiten ergeben sich aus den nachfolgenden Darlegungen, welche zwei beispielsweise Ausführungsformen des erfindungsgemässen Explosionsschutzorganes anhand der Zeichnung erläutern. Es zeigen:

Fig. 1   das Explosionsschutzorgan nach der ersten Ausführungsform im Querschnitt,

Fig. 2   die Eintrittseite des Explosionsschutzorganes nach Fig. 1 in Ansicht,

Fig. 3   ein Ausschnitt aus Fig. 1 in vergrössertem Massstab dargestellt,

Fig. 4   eine Querschnittsdarstellung einer erfindungsgemässen Explosionsschutzeinheit aus einem erfindungsgemässen passiven Explosionsschutzorgan in einer zweiten Ausführungsform und einem bekannten Explosionsschutzventil, und

Fig. 5   eine Seitenansicht der Einheit nach Fig. 4, teilweise im Schnitt.

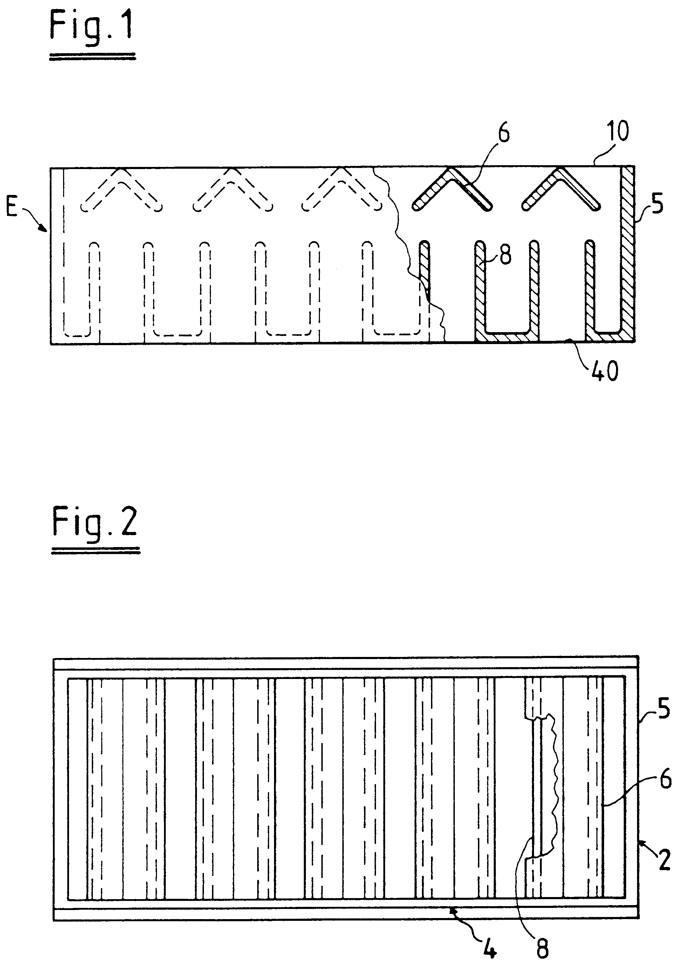

Wie die Darstellung nach den Fig. 1, 2 und 3 zeigt, besitzt das Explosionsschutzorgan E einen durch einen Rahmen 2 bestimmten länglichen, rechteckförmigen Grundriss, auf welchen bezüglich Abmessungen weiter unten noch eingegangen wird. Innerhalb des Rahmens 2 erstrecken sich quer zu dessen Längsschenkeln 4 zueinander parallel verlaufende Profile bzw. Elemente 6 und 8, die in zwei zueinander parallelen Reihen angeordnet sind. Die Profile 6 und 8 bestehen aus Stahl und sind mit dem ebenfalls aus Stahl gebildeten Rahmen 2 an dessen Längsschenkeln 4 starr verbunden. Die Profile 6, die der mit 10 bezeichneten Eintrittsseite des Rahmens 2 benachbart angeordnet sind, sind Winkelprofile, z.B. mit unter 90° zueinander verlaufenden Schenkeln 12. Die Profile 6 besitzen einen Scheitel 14, der der Eintrittsseite 10 zugekehrt ist, und die beiden Schenkel 12 schliessen mit dieser Eintritts seite gleich grosse Winkel $\alpha$ ein, d.h. im vorliegenden Fall solche von je 45°. Die Profile 8 weisen U-Form auf und besitzen einen Steg 16, der mit einer Austrittsseite 20 des Rahmens 2 bündig verläuft. Die im dargestellten Ausführungsbeispiel geraden und untereinander parallel verlaufenden Schenkel 18 sind mit dem Steg 16 unter einem Winkel von 90° verbunden. Es bleibt nachzutragen, dass die Profile 6 und 8 über die Länge des Rahmens 2 regelmässig verteilt angeordnet sind. Diese Profile weisen jedoch untereinander eine Versetzung so auf, dass, wie aus Fig. 2 ersichtlich, der Scheitel 14 eines Profiles 6, in Draufsicht betrachtet, zwischen den Schenkeln 18 zweier benachbarter Profile 8 liegt.

Aus funktioneller Sicht betrachtet bilden die Schenkel 12 der Eintrittsseite 10 zugekehrte Leitflächen 22, die eine zwischen zwei benachbarten Profilen 6 gebildete Eintrittszone 24 seitlich begrenzen und einer schlitzförmigen Eintrittsöffnung 26 vorgeschaltet sind. An die Eintrittsöffnung 26, die die Breite a hat, schliesst sich eine in der Breite erweiterte Verbindungskammer 28 an. Der Eintrittsöffnung 26 gegenüber mündet die Verbindungskammer 28 in eine längliche Reflektionskammer 30. Jede Reflektionskammer 30 ist, wie ersichtlich, in der Breite b durch die Schenkel 18 und in der Länge l durch den Steg 16 eines Profiles 8 begrenzt. Die Breite a der Eintrittsöffnung 26 ist kleiner als die Breite b der auf dieser symmetrisch ausgerichteten Reflektionskammer 30. Zwei seitliche Durchtrittsöffnungen 32, die je zwischen einem Schenkel 18 des Profiles 8 und einem Schenkel 12 des Profiles 6 begrenzt sind, und die die Breite c aufweisen, schliessen ebenfalls an die Verbindungskammer 28 an und führen in einen Expansionsraum 34. Jeder Expansionsraum 34 ist durch die Innenflächen 36 der Schenkel 12 eines Profiles 6 begrenzt und mündet in einen Austrittskanal 38. Die Schenkel 18 benachbarter Profile 8 begrenzen den Austrittskanal 38 in seiner Breite, wobei dieser in einer an der Austrittsseite 20 des Rahmens liegenden Austrittsöffnung 40 endet. Durch die parallele Anordnung der Profile 6 und 8 zueinander und zu den Querschenkeln 5 des Rahmens 2 sind die Querschnitte der Zonen 24, Kammern 28 und 30 sowie der Expansionsräume 34 über ihre ganze Länge konstant.

Nunmehr soll das beschriebene Explosionsschutzorgan im Falle einer Explosion und im normalen Lüftungsbetrieb betrachtet werden. Für den Lüftungsbetrieb wird angenommen, dass das Explosionsschutzorgan am Eintritt eines Zuluftkanales für einen Schutzraum angeordnet ist und mit einem schutzraumseitig angeordneten Ventilator in Verbindung steht.

Beim Auftreten einer Druckwelle an der Eintrittsseite 10 des Explosionsschutzorganes wird der Stoss in der Eintrittszone 24 gegen die Eintrittsöffnung 26 hin kanalisiert. In der Verbindungskammer 28 findet eine erste Expansion statt, wobei der Hauptteil des kanalisierten Stosses in die Reflektionskammer 30 eintritt. Die Reflektion, die sowohl am Steg 16, wie auch an den Schenkeln 18 stattfindet, wirkt mit erhöhtem Druck in die Verbindungskammer 28 zurück. Dabei richtet sich ein Teil der Reflektion gegen die Eintrittsöffnung 26 und bewirkt dort sowie in der Eintrittszone 24 eine Abbremsung des ebenfalls dort eintreffenden nachfolgenden Druckes. Soweit inzwischen Teile des Stosses über die Durchtrittsöffnung 32 in den Expansionsraum 34 gelangt sind, erfolgt durch die Umlenkung an den Innenflächen 36 der Schenkel 12 und die sich ergebende Durchwirbelung eine Abbremsung des nachfolgenden Druckes an der Durchtrittsöffnung. Erst unter weiterem Abbau durch Expansion kann der verbleibende Druck/Impuls dann über den Austrittskanal 38 in Richtung des Schutzraumes wirken.

Durch die pfeilförmige Ausgestaltung der Profile 6 gegen die Eintrittseite 10 hin wird eine Reflektion von Druckwellen auch dann weitgehend verhindert, wenn diese unter spitzen Winkeln zur Eintrittsseite 10 ankommen. Die Profile 6 bilden auch einen wirksamen Splitterschutz.

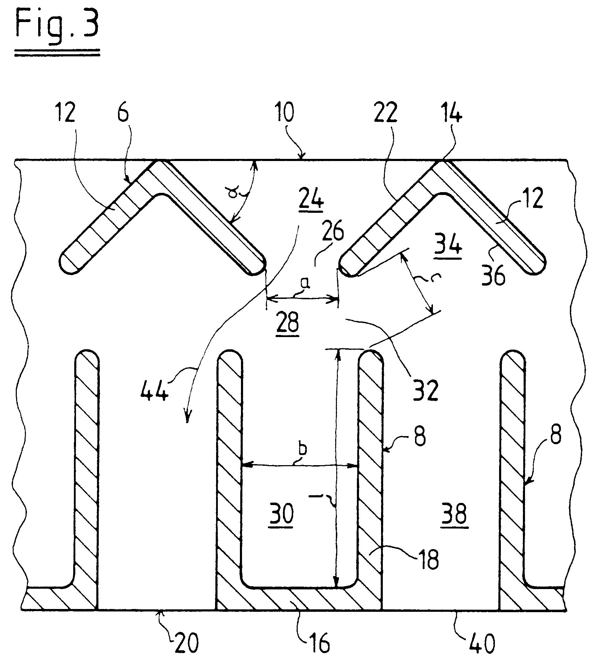

Im Lüftungsbetrieb wird aus der Umgebung des Explosionsschutzorganes Aussenluft angesaugt. Die sich bildende Strömung erfährt beim Durchgang durch die Eintrittszone 24 dank der Anstellung der Leitelemente 22 unter dem Winkel α und der damit bewirkten graduellen Querschnittsverengung eine kleine Beschleunigung. Dementsprechend erreicht die Strömung mit kleinem Druckverlust die Verbindungskammer 28. Sich in dieser bildende Teilströme verlaufen durch die beiden benachbarten Durchtrittsöffnungen 32 und gelangen am jeweiligen Expansionsraum 34 vorbei praktisch direkt in den zugehörigen Austrittskanal 38. Damit erfährt die Strömung auch hier eine relativ geringe Umlenkung, wie durch den Pfeil 44 in Fig. 3 angedeutet ist. Mithin hält sich auch hier der Druckverlust in annehmbaren Grenzen.

Wesentlich ist, dass die Strömung im Lüftungsbetrieb nicht jenem Pfad folgen muss, welcher einem Druckstoss aufgezwungen wird.

Der Winkel α könnte auch einen grösseren oder kleineren als den angegebenen Wert haben. Ebenso ist ein anderer als ein rechtwinkliger Verlauf der Schenkel 18 relativ zu den Stegen 16 denkbar und möglich.

Da das Explosionsschutzorgan keine beweglichen Teile aufweist, lässt sich dieses ohne Montage- und Einstellarbeit herstellen. Im Vergleich zu Explosionsschutzventilen ist die Wirksamkeit gegen Druckstösse mit steiler Anstiegsflanke einem verbesserten Schutz förderlich.

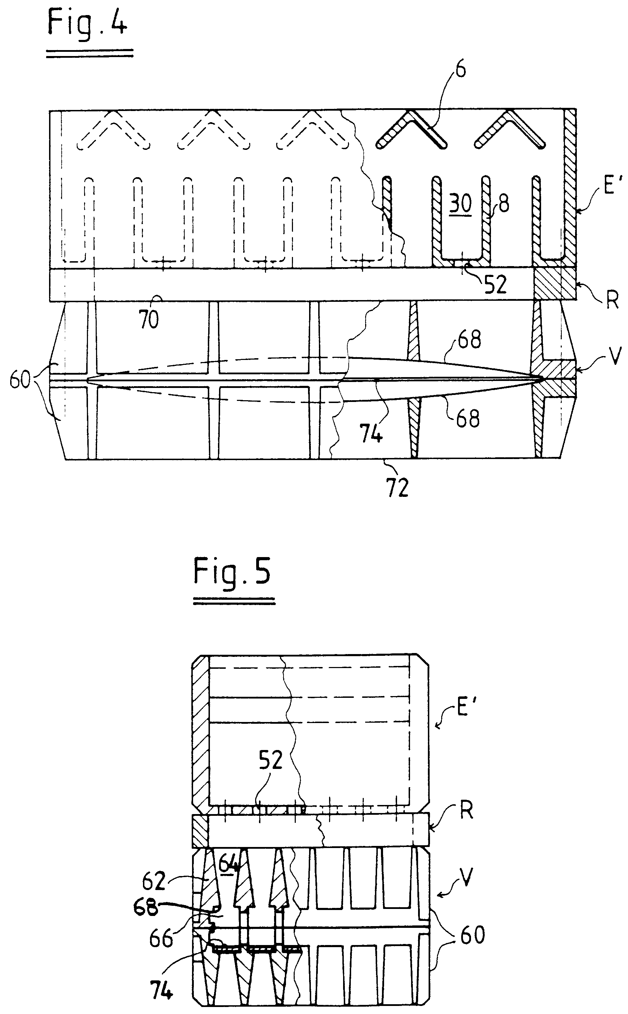

Das erfindungsgemässe Explosionsschutzorgan lässt sich zusammen mit einem Schnellschlussventil anwenden. Eine vorteilhafte Ausgestaltung des Explosionsschutzorganes in einer Explosionsschutzeinheit, die ein solches Ventil umfasst, ist in den Fig. 4 und 5 dargestellt.

Die gezeigte Explosionsschutzeinheit umfasst ein in Draufsicht rechteckiges Explosionsschutzorgan E' und ein mit diesem verbundenes Schnellschlussventil V, das gleiche Grösse und Form besitzt. Schnellschlussventile dieser Art sind beispielsweise aus der CH-A 449433 bekannt. Da das Organ E' weitgehend dem Explosionschutzorgan E nach den Fig. 1-3 entspricht, sind gleiche Teile desselben mit den in diesen verwendeten Bezugszeichen versehen. Zu beachten ist, dass abweichend vom Organ E das Organ E' in den Stegen 16 je mindestens eine Oeffnung 52 aufweist, wobei die Austrittseite 20, an welcher diese Stege liegen, dem Ventil V zugekehrt ist. Das Ventil V umfasst zwei einander gegenüberliegend angeordnete Sitzteile 60, die in nicht dargestellter Weise starr miteinander verbunden sind. Die Sitzteile 60 besitzen je eine Mehrzahl von Stegen 62, die zwischen sich Kanäle 64, Durchtrittsöffnungen 66 und Sitzflächen 68 bilden. Die Durchtrittsöffnungen 66 und die diese begrenzenden Sitzflächen 68 der beiden Sitzteile sind einander gegenüberliegend angeordnet. Zwischen den Sitzteilen 60 ist für jede Durchtrittsöffnung 66 ein als Blattfeder ausgebildetes Schliesselement 74 in auf die Sitzflächen 68 ausgerichteter Lage beweglich gehalten. Dieses Schliesselement ist in Fig. 4 in seiner neutralen offenen Lage dargestellt, während Fig. 5 diese in einer geschlossenen Lage zeigt. Die Stirnseite 70 des Ventiles V ist der Austrittsseite 20 des Organes E' zugekehrt. Der Luftaustritt der Explosionsschutzeinheit befindet sich an der Stirnseite 72. Das Organ E' ist mit dem Ventil V über einen Rahmen R starr verbunden.

Aus dem vorstehenden ergibt sich in bezug auf die Schliesselemente 74, dass jede der mit einem dieser Elemente verbundenen Oeffnungen 52 mit der zugehörigen Eintrittsöffnung 26 auf kürzerem Weg verbunden ist, als die entsprechende Austrittsöffnung 40 des Organes E'.

Erreicht im Falle einer Explosion ein Druckstoss die Explosionsschutzeinheit, so wirkt sich dieser, wie vorstehend dargelegt, vorerst in der Reflektionskammer 30 aus. Durch die Oeffnungen 52 in den die Reflektionskammer begrenzenden Stegen 16 wirkt ein Teildruck unmittelbar in die Kanäle 64 und beaufschlagt dort die Schliesselemente 74. Noch bevor der Druckstoss in abgebauter Grösse durch die Austrittskanäle 38 am Ventil V angelangt ist, werden demnach die Schliesselemente 74 gegen die entsprechenden Sitzflächen 68 im Sinne einer Voransteuerung angelegt. Die Durchtrittsöffnungen 66 sind demnach geschlossen, wenn sich der Hauptdruck/Impuls in den an die Eintrittsseite 70 anschliessenden Kanälen 64 auswirkt. Ein nennenswerter Druckanstieg im Schutzraum ist damit auf jeden Fall verunmöglicht.

Im Falle des Lüftungsbetriebes ermöglichen die Oeffnungen 52 für einen Teil der angesaugten Luftmenge einen geradlinigen Strömungsweg aus der Eintrittsöffnung 26 des Organes E'in das in diesem Fall offene Ventil V, wodurch eine feststellbare Verringerung der noch vorhandenen Druckverluste eintritt. Es ist deshalb vorteilhaft, solche Oeffnungen auch bei einem Explosionsschutzorgan nach Fig. 1 bis 3 vorzusehen.

Anstelle von Stahl, welcher als Material auch für alle Teile des Schnellschlussventiles in erster Linie in Betracht kommt, kann dieses, wie auch das Explosionsschutzorgan aus anderen metallischen Baustoffen einschliesslich aus einer Aluminium-Legierung hergestellt sein.

## Patentansprüche

1. Passives Explosionsschutzorgan, für den Luftdurchlass eines Schutzraumes, dadurch gekennzeichnet,

   dass zwischen zwei parallel verlaufenden metallischen Elementen (6) eine schlitzförmige Eintrittsöffnung (26) vorgesehen ist, die in eine Verbindungskammer (28) mündet, wobei die Elemente Leitflächen (22) einer vor der Eintrittsöffnung vorgesehenen Eintrittszone (24) bilden, die in Strömungsrichtung angestellt sind,

   dass eine in Richtung der Eintrittsöffnung offene, längliche Reflektionskammer (30) an die Verbindungskammer anschliesst, und

   dass die Verbindungskammer über eine seitliche Durchtrittsöffnung (32) mit einem Expansionsraum (34) verbunden ist, welcher eine zur Verbindung mit dem Schutzraum bestimmte Austrittsöffnung (40) aufweist.

2. Explosionsschutzorgan nach Anspruch 1, dadurch gekennzeichnet, dass die Reflektionskammer ausschliesslich in Richtung der Eintrittsöffnung offen ist.

3. Explosionsschutzorgan nach Anspruch 1, dadurch gekennzeichnet, dass die Reflektionskammer (30) eine Ansteueröffnung (52) für ein nachschaltbares Schnellschlussventil (V) aufweist.

4. Explosionsschutzorgan nach Anspruch 2 oder 3, dadurch gekennzeichnet, dass zwei parallele Reihen von untereinander parallelen Profilelementen (6) bzw. (8) vorgesehen sind, von denen die einen zwischen sich eine Mehrzahl von Eintrittsöffnungen (26) begrenzen und die Leitflächen (22) bilden, und von denen die anderen die Reflektionskammern (30) begrenzen.

5. Explosionsschutzorgan nach Anspruch 4, dadurch gekennzeichnet, dass die die Leitflächen (22) bildenden Elemente (6) Winkelprofile mit einem der Eintrittsseite (10) zugekehrten Scheitel (14) und die die Reflektionskammer (30) begrenzenden Elemente (8) gegen die Eintrittsöffnung (26) offene U-Profile sind.

6. Explosionsschutzorgan nach einem der Ansprüche 4 oder 5, dadurch gekennzeichnet, dass die Profilelemente (6, 8) in einem vorzugweise länglichen, rechteckförmigen Rahmen (2) angeordnet und mit dessen Längsschenkeln (4) starr verbunden sind.

7. Die Verwendung des Explosionsschtuzorganes nach Anspruch 1 oder 3 in einer, ein Schnellschlussventil (V) umfassenden Explosionsschutzeinheit.

8. Die Verwendung nach Anspruch 7, dadurch gekennzeichnet, dass das Explosionschutzorgan (E') zur Voransteuerung des Schnellschlussventiles (V) ausgebildet ist.

9. Explosionsschutzeinheit, dadurch gekennzeichnet, dass einem Explosionsschutzventil (V) ein passives Schutzorgan (E, E') vorgeschaltet ist.

10. Explosionsschutzeinheit nach Anspruch 9, dadurch gekennzeichnet, dass das Explosionsschutzorgan (E') mit dem Explosionsschutzventil (V) verbundene Ansteueröffnungen (52) aufweist, die mit zugehörigen Eintrittsöffnungen (26) des Explosionsschutzorganes auf kürzerem Weg verbunden sind, als dessen Austrittsöffnungen (40).

Fig.1

Fig.2

# Fig. 3

## Fig.4

## Fig.5

Europäisches
Patentamt

# EUROPÄISCHER RECHERCHENBERICHT

Nummer der Anmeldung

EP    90 12 3086

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | DE-A-1708077 (MANNESMANN) <br> * Anspruch 1; Figuren * <br> --- | 1, 2, 4-6 | A62B13/00 |
| X | DE-B-1252068 (EWERS & MIESNER) <br> * Spalte 3, Zeilen 53 - 62 * <br> * Spalte 5, Zeile 51 - Spalte 6, Zeile 17; Figuren * | 9 | |
| A | | 1, 3, 7, 8 | |
| | --- | | |
| A | US-A-3129648 (HOFF) <br> * Figuren * <br> --- | 1 | |
| A | DE-B-1255501 (LUWA) <br> --- | | |
| A | DE-C-1001898 (MANNESMANN) <br> ----- | | |

| RECHERCHIERTE SACHGEBIETE (Int. Cl.5 ) |
|---|
| A62B |

Der vorliegende Recherchenbericht wurde für alle Patentansprüche erstellt

| Recherchenort | Abschlußdatum der Recherche | Prüfer |
|---|---|---|
| DEN HAAG | 28 JUNI 1991 | WALVOORT B.W. |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.................................................................
& : Mitglied der gleichen Patentfamilie, übereinstimmendes Dokument